# EUROPEAN PATENT SPECIFICATION

(11) **EP 0 385 322 B1**
(45) Date of publication and mention of the grant of the patent: **27.12.1995**
(21) Application number: 90103646.7
(22) Date of filing: 25.02.1990
(51) Int. Cl.: H04N 5/44

(54) **Improved television receiver**
Fernsehempfänger
Récepteur de télévision

(30) Priority: 02.03.1989 IT 6714189
(43) Date of publication of application: 05.09.1990
(73) Proprietor: EDICO S.r.l., I-00197 Roma (IT)
(72) Inventor: Farina, Attilio, Ing., I-10127 Torino (IT)
(74) Representative: Notaro, Giancarlo

(56) References cited:
- WO-A-81/00945
- US-A- 4 314 285
- PATENT ABSTRACTS OF JAPAN vol. 12, no. 461 (E-689)(3308) December 5, 1988 & JP-A- 63 185 173 (MATSUSHITA ELECTRIC IND ) July 30, 1988

## Description

Present invention refers to a television signal receiver, comprising a video signal demodulator, a comparator circuit for the purpose of sensing a change of the transmitted picture shape, and an operating element connected to the output thereof.

It is known that the always increasing intrusion of commercial advertising represents a serious problem for the television programs viewer; also known is the fact that such ads are particularly annoying during transmission of movies, because they usually interrupt the story in the most interesting moments.

It is known too, as a proposal, that the transmitting stations should insert into the transmission, at the point when the ads start, suitably chosen signals in order to allow the receiver to eliminate such ads, at least for recording purposes.

But the transmitting stations are clearly unwilling to do so, as that would mean less value to the advertising, and therefore would be undesired by the client which pays for the ad itself.

It is known from WO-A-8100945 a method for editing commercial messages from television signals, based on a control circuit for detecting each of a series of fade breaks in the video and audio components of the television signals.

It is also known from Patent Abstract of Japan, vol. 12, no. 461 (E-689) (3308) (JP-A-63 185 173) a television receiver comprising a blank detecting circuit for sensing a change of the transmitted picture shape.

It is an object of the present invention to indicate how it would be possible to achieve a television signal receiver which allows, at least in some cases. and particularly during the movies, to individuate the advertising and automatically neutralize them, even in lack of special identifying signals by the transmitting stations.

To obtain the said object, the subject of present invention is a television signal receiver with the characteristics indicated in the first claim and the method of the final claim.

Other objects and advantages of the present invention will be clear from the detailed description which follows and from the attached drawings, which are supplied only as an explanatory and not limiting example, wherein:
figure 1 shows the television screen as it appears during the transmission of movies and during the transmission of advertising;
figure 2 shows the video signal during a black line and the shape of a signal produced by the television receiver according to the invention;
figure 3 shows the simplified block diagram of the essential part of the television receiver according to the invention.

The invention is based on the acknowledgement of the fact that the great part of the present movies shows an image ratio different from 3:4, for instance a ratio of 4:9 (cinemascope).

As a consequence, during the transmission of movies, in the top and bottom parts of the screen, two black stripes appear, which extend vertically for the 10-15°′ of the screen, both at the top and at the bottom.

During such black stripes, the depth of video modulation, which as known may vary from 10 to 75%, is very near to the minimum, i.e. to 75% (as known the video modulation is negative, at least according to the italian rule).

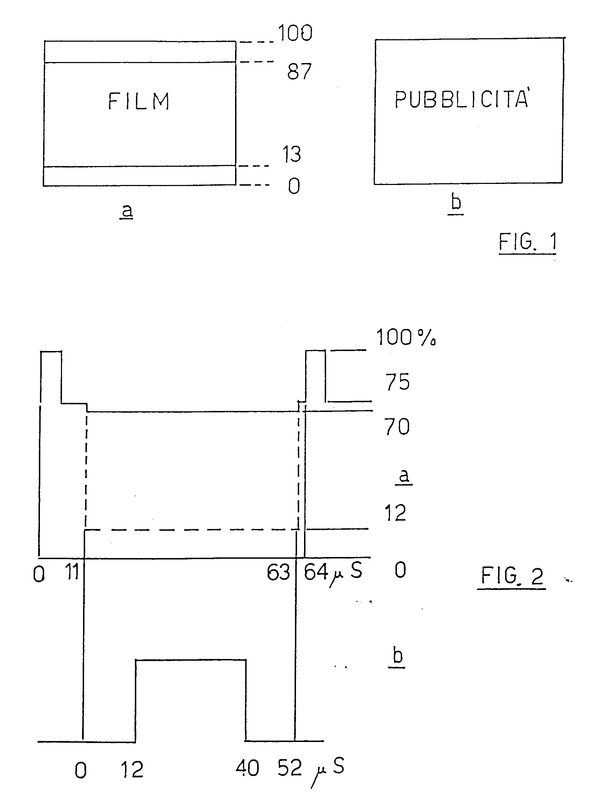

During an advertising, on the contrary, the picture ratio is the classic one, i.e. 3:4, and the said black stripes do not appear. In figure 1 it is just shown, on the left, the television screen as it appears during the transmission of the cinemascope movies (a), and on the right hand the same screen as it appears during a typical commercial advertising (b).

The height of each one of the black stripes is usually about the 13% of the total screen height; according to the italian rule each frame consists of 312.5 horizontal lines, a part of which is transmitted during the vertical retrace, so that being 290 the active lines, the black areas occupy an average of about 40 lines at the top and so many at the bottom of the screen.

By means of a line counter the television receiver can, for instance, check the depth of modulation during the 20th and the 270th line of the active part of the frame; if the depth of modulation is about 70%, the checked lines are black lines, and the transmission of the movies is inferred; if, on the contrary, the depth of modulation is variable, but in any case generally less than that, the checked lines contain video information, and a commercial ad transmission is inferred.

To be on the safe side the alarm level may be set at an intermediate value, for instance at 60%.

Additionally it may happen that during the movies in one of the corners there is a white inscription, or an identifying mark of the transmitting station (as RAI UNO, or the number 4, or any other mark); so that it is advisable that the depth of modulation is verified only in the central part of the checked lines.

In the upper part (a) of figure 2 there is shown the behaviour of the video signal during a typical black line, depth 70% (solid line) and a typical white line, depth 12% (dotted line).

In the lower part of the same figure 2 (b) there is shown the behaviour of a suitable signal to effect the sampling of the video signal during the to lines to be checked; as shown it is a simple squared signal, which lasts for about 28 microseconds, centered in respect of the active part of the television line (the active part is the part of 52 microseconds, which is left excluding the sync and blanking parts).

Combining the signal coming from the line counter and the 28 microseconds window signal coming from the above said generator, it is possible to easily verify the depth of modulation during the central parts of the relevant lines; the position (i.e. the number) of the checked lines may advantageously be made manually adjustable within determined limits (for instance within the 10th and the 30th line for the upper part and within the 260th and the 280th line for the lower part of the screen.

In this way it is possible to optimize the operation of the device. When it is sensed that during both the checked lines (or if preferred during only one of them) the depth of modulation drops under the 60% level, it is automatically activated the suppression of the sound (the so called muting); or the tuner is switched onto a different predetermined channel for a predetermined interval of time (e. g. 3 minutes'); such a switching is particularly advantageous in the case of a television receiver having the possibility to receive in parallel two channels, as in the known P.I.P. (picture in picture) systems; in such receivers in fact it should be possible to change the channel, so to avoid the advertising, still controlling the main channel, so to be able to switch again onto it as soon as the ads are over.

Advantageously the user can manually select what should happen during the ads (muting or channel switching or teletext reception or even videotape stopping, in order not to record the ads).

Also advantageous is the fact that the receiver provides for a memory, preferably of the non-volatile type, to hold the user choices (which lines to check, what operational element to activate or disactivate, etc.). Moreover it is advantageous if the system control is made by means a microprocessor; all recent television receivers comprise at least one of them.

Also advantageous may be, in order to avoid undesired switchings, due to disturbances or spurious signals, that the activation or disactivation take place only when the change in the depth of modulation lasts for a determined period of time, i.e. 0.5 seconds.

Instead of checking the depth of modulation during two predetermined lines, it may be advantageous to check it during all lines of the frame, and keep a count of the black subsequent lines at the beginning and/or at the end of the frame, and to perform the activation or disactivation of the choosen operational element when the number of the black lines changes (e.g. from 30 to 5 at each side, or viceversa).

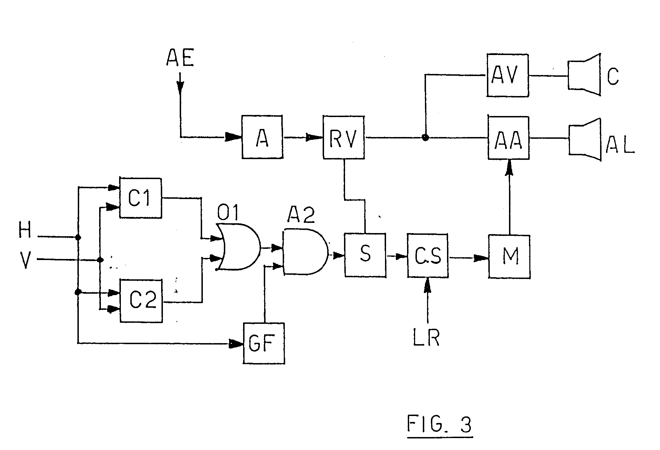

In figure 3 there is shown the simplified block diagram of the essential part of the television receiver according to the invention. In figure 3 the symbol H indicates a line frequency signal (15,625 Hz), which is available in the receiver, e.g. the line retrace signal; symbol V indicates a frame frequency signal (50 Hz), also available in the receiver, e.g. the vertical retrace signal.

The said two signals are fed to two counters, indicated respectively by symbols C1 and C2, which are set to count e.g. the first one up to 20 and the second one up to 270, and which are reset by signal V. Both the counters may be of the variable preset type, in order to may vary the counting.

Symbol 01 indicates an OR gate which receives the output signals from both counters; symbol GF indicates a window signal generator, which receives the signal H and generates the signal as shown in figure 2b; the output from the OR gate is fed, together with the output signal of generator GF, to a circuit, indicated by the symbol A2, which acts as an AND gate, in that it lets the signal coming from window generator GF proceed forward only while the output from gate 01 is high, i.e. during the 20th and the 270th line.

The antenna receiving the television signals is indicated by symbol AE; the signals are amplified by an amplifying and converting circuit, according to the known practice of television receivers; said amplifier-converter is indicated by symbol A.

By symbol RV it is indicated the video demodulator, also known, which provides at its output the composite video signal; said signal is fed to an adding circuit, indicated by symbol S, which receives also the output signal coming from circuit A2.

Out of the composite video signal there are obtained the true video signal, which is fed to an amplifier AV and, later, to the picture tube or another display device C, and the audio signal, which is fed to an audio amplifier AA and to the loudspeaker AL.

From circuit S it is obtained the video signal corresponding to the window generated by generator GF; said signal is fed to a circuit CS which compares the level of said signal (for instance the average level during the window period) with a reference level LR.

Level LR may be adjustable.

If the level of the signal is less than the level LR, a pulse appears at the comparator CS output.

Said pulse is fed to a subsequent memory block, indicated by symbol M; block M comprises in fact three cascaded circuits: a module 2 counter, reset by vertical pulse V; said counter generates at its output a pulse, which is fed to the second circuit, which is of the monostable type; this circuit in turn generates at its output a pulse lasting for a time slightly less than a frame (e.g. 18 milliseconds); said pulse is fed to the third circuit, which is a low-pass filter, having a time constant much greater than the pulse length (e.g. 500 milliseconds).

The filter output is connected to a suitable terminal of the amplifier AA, which provides for stopping the operation of the amplifier itself, so that the audio is suppressed each time the signal at said terminal is greater than a predetermined value, and for re-establishing the operation each time the signal level decreases again under such a value.

In this way, if during both lines of a frame comparator CS senses a depth of modulation less than LR, the counter in block M sends a pulse to the monostable circuit, which generates its 18 milliseconds segnal; if such a situation lasts for a sufficient number of subsequent frames, the level at the low pass filter output becomes greater than the predermined level and the amplifier AA is cut off.

When during a sufficient number of frames no modulation is sensed during the checked lines, the level comes down again under the limit and the operation of amplifier AA is resumed.

The described example is referred to the italian transmission standard (625 lines PAL system), but it is evident that the principle of the invention is not depending from the relevant television standard, which could be the american one (525 lines NTSC), as well as the french SECAM or any other.

It is clear from the above description that the television receiver according to the invention allows to avoid or to lessen, in the great part of the cases, the commercial ads inconvenience, so increasing the comfort for the viewer.

## Claims

1. Television signal receiver, comprising a video signal demodulator (RV), a comparator circuit (CS) for the purpose of sensing a change of the transmitted picture shape, and an operating element (AA) connected to the output thereof, characterized in that, in order to detect an advertising insert and to eliminate its disturbing aspects, said comparator circuit (CS) averages the level of selected parts of selected lines (20, 270) of the video signal received from said video signal demodulator (RV), compares said averaged video level with a reference level (LR), and outputs a signal for controlling said operating element (AA) if said averaged video signal level remains less than said reference level (LR) for a predetermined period of time.

2. Television signal receiver, according to claim 1, characterized in that said comparator (CS) senses the modulation level of said composite video signal during a determined period of at least two picture lines, the first line in the upper quarter of the picture and the second line in the lower quarter of the picture.

3. Television signal receiver, according to claim 2, for the PAL transmission system, with 625 lines, 50 interlaced frames per second, characterized in that said first line is comprised between the 10th and the 40th active line of each transmitted frame, and that said second line is comprised between the 250th and the 280th active line of each transmitted frame.

4. Television signal receiver, according to claim 2 or 3, characterized in that said first and said second line is selected, within some limits, by means of manual selection means.

5. Television signal receiver, according to claim 2, characterized in that said determined period of said two picture lines is comprised between 10 and 42 microseconds starting from the beginning of the active period of the said lines.

6. Television signal receiver, according to one of the preceding claims from 1 to 5, characterized in that said operating element (AA) is a device consenting the sound reproduction (muting).

7. Television signal receiver, according to claim 2, characterized in that said second means provides for activating or disactivating said operating element (AA) each time that said comparator (CS) senses that the video modulation percentage is respectively greater or less than a predetermined level .

8. Television signal receiver, according to one of the preceding claims from 1 to 5, characterized in that said operating element (AA) is a device switching from the received television channel to another predetermined receivable channel.

9. Television signal receiver, according to claim 8, comprising a so called P.I.P. (picture in picture) device, characterized in that said switching device is a device for exchanging the main received channel with the secondary received channel.

10. Television signal receiver, according to one of the preceding claims from 1 to 5, characterized in that said operating element (AA) is a device for activating or disactivating an accessory apparatus connected to the television receiver.

11. Television signal receiver, according to claim 10, characterized in that said accessory apparatus connected to the television receiver is a video tape recorder.

12. Television signal receiver, according to one of the preceding claims from 1 to 5, characterized in that said operating element (AA) to be activated or disactivated is selectable, among a plurality of operating elements, by means of manual selection means.

13. Television signal receiver, according to one of the preceding claims, characterized in that said comparator (CS) comprises a picture lines counter and a line frequency window signal generator.

14. Television signal receiver, according to claim 2, characterized in that said second means provides for activating or disactivating said operating element (AA) each time the change is sensed by said comparator (CS) during one of the said picture lines.

15. Television signal receiver, according to claim 2, characterized in that said second means provides for activating or disactivating said operating element (AA) if and only if the change is sensed by said comparator (CS) during both the said picture lines.

16. Television signal receiver, according to claim 7, characterized in that said predetermined modulation level is 60%.

17. Television signal receiver, according to claim 2, characterized in that said second means provides for activating or disactivating said operating element (AA) if and only if the change sensed by said comparator (CS) lasts for a predetermined period of time.

18. Television signal receiver, according to claim 17, characterized in that said predetermined period of time is equal to 0.5 seconds.

19. Television signal receiver, according to one or both the preceding claims 4 and 12, characterized in that it comprises memory means for memorizing the manually effected selections.

20. Television signal receiver, according to one of the preceding claims from 1 to 5, characterized in that said operating element (AA) is a device for switching from the normal television reception to a teletext signal reception.

21. Television signal receiver, according to one of the preceding claims, characterized in that it comprises microprocessor control means for controlling said first and/or second means.

22. Television signal receiver, according to claim 1, characterized in that said comparator (CS) comprises one or more counters for counting the number of lines substantially without video modulation in the initial and final part of the picture, and that said second means provides for activating or disactivating said operating element (AA) each time the number of said lines without video modulation changes at least of or more than a predetermined number.

23. Method for detecting an advertising insert and to eliminate its disturbing aspects in a television signal receiver, comprising a video signal demodulator, a blank detecting circuit for the purpose of sensing a change of the transmitted picture shape, and an operating element (AA) connected to the output thereof, the method comprising the following steps:
- the video level is sensed and averaged during a selected part of selected deflection lines (20, 270),
- the resulting averaged video level is compared with a reference level (LR), and
- if said averaged video level remains less than said reference level for a predetermined period of time, a command signal is produced for said operating element (AA).

## Patentansprüche

1. Fernsehsignalempfänger, mit einem Videosignaldemodulator (RV), einer Komparatorschaltung (CS) zum Zweck des Feststellens einer Änderung der Form des übertragenen Bildes und einem mit dessen Ausgang verbundenen Betriebselement (AA),
dadurch gekennzeichnet, daß zur Detektion einer eingefügten Werbung und zum Eliminieren von deren störenden Aspekten die Komparatorschaltung (CS) den Pegel ausgewählter Teile ausgewählter Zeilen (20, 270) des von dem Videosignaldemodulator (RV) empfangenen Videosignals mittelt, den gemittelten Videopegel mit einem Referenzpegel (LR) vergleicht und ein Signal zum Steuern des Betriebselementes (AA) abgibt, wenn der gemittelte Videosignalpegel für eine vorbestimmte Zeitdauer kleiner bleibt als der Referenzpegel (LR).

2. Fernsehsignalempfänger nach Anspruch 1,
dadurch gekennzeichnet, daß der Komparator (CS) den Modulationspegel des zusammengesetzten Videosignals während einer vorbestimmten Zeitdauer von wenigstens zwei Bildzeilen feststellt, wobei die erste Zeile im oberen Viertel des Bildes und die zweite Zeile im unteren Viertel des Bildes liegt.

3. Fernsehsignalempfänger nach Anspruch 2, für ein PAL-Sendesystem mit 625 Zeilen und 50 Halbbildern pro Sekunde,
dadurch gekennzeichnet, daß die erste Zeile zwischen der 10. und der 40. aktiven Zeile eines jeden gesendeten Einzelbildes liegt und daß die zweite Zeile zwischen der 250. und der 280. aktiven Zeile eines jeden gesendeten Einzelbildes liegt.

4. Fernsehsignalempfänger nach Anspruch 2 oder 3,
dadurch gekennzeichnet, daß die erste und die zweite Zeile innerhalb bestimmter Grenzen mittels einer manuellen Auswahleinrichtung ausgewählt wird.

5. Fernsehsignalempfänger nach Anspruch 2,
dadurch gekennzeichnet, daß die vorbestimmte Zeitperiode der beiden Bildzeilen zwischen 10 und 42 »s liegt, und zwar anfangend mit dem Beginn der aktiven Periode dieser Zeilen.

6. Fernsehsignalempfänger nach einem der vorausgehenden Ansprüche 1 bis 5,
dadurch gekennzeichnet, daß es sich bei dem Betriebselement (AA) um eine mit der Tonwiedergabe im Zusammenhang stehende Einrichtung handelt (muting).

7. Fernsehsignalempfänger nach Anspruch 2,
dadurch gekennzeichnet, daß die zweite Einrichtung ein Aktivieren oder Deaktivieren des Betriebselementes (AA) jedesmal dann bewirkt, wenn der Komparator (CS) feststellt, daß die Videomodulationsprozentzahl größer bzw. kleiner ist als ein vorbestimmter Pegel.

8. Fernsehsignalempfänger nach einem der vorausgehenden Ansprüche 1 bis 5,
dadurch gekennzeichnet, daß das Betriebselement (AA) eine Vorrichtung ist, die von dem empfangenen Fernsehkanal auf einen anderen vorbestimmten empfangbaren Kanal umschaltet.

9. Fernsehsignalempfänger nach Anspruch 8, mit einer sogenannten P.I.P.-(Bild-in-Bild-)Vorrichtung,
dadurch gekennzeichnet, daß die Schaltervorrichtung eine Vorrichtung zum Austausch des Hauptempfangskanal mit dem Zweitempfangskanal ist.

10. Fernsehsignalempfänger nach einem der vorausgehenden Ansprüche 1 bis 5,
dadurch gekennzeichnet, daß das Betriebselement (AA) eine Vorrichtung zum Aktivieren oder Deaktivieren eines mit dem Fernsehempfänger verbundenen Zusatzgerätes ist.

11. Fernsehsignalempfänger nach Anspruch 10,
dadurch gekennzeichnet, daß das mit dem Fernsehempfänger verbundene Zusatzgerät ein Videobandrekorder ist.

12. Fernsehsignalempfänger nach einem der vorausgehenden Ansprüche 1 bis 5,
dadurch gekennzeichnet, daß das zu aktivierende oder deaktivierende Betriebselement (AA) mittels einer manuellen Auswahleinrichtung aus einer Mehrzahl von Betriebselementen auswählbar ist.

13. Fernsehsignalempfänger nach einem der vorausgehenden Ansprüche,
dadurch gekennzeichnet, daß der Komparator (CS) einen Bildzeilenzähler und einen Zeilenfrequenzfenstersignalgenerator aufweist.

14. Fernsehsignalempfänger nach Anspruch 2,
dadurch gekennzeichnet, daß die zweite Einrichtung ein Aktivieren oder Deaktivieren des Betriebselementes (AA) jedesmals bewirkt, wenn die Änderung von dem Komparator (CS) während einer der genannten Bildzeilen festgestellt wird.

15. Fernsehsignalempfänger nach Anspruch 2,
dadurch gekennzeichnet, daß die zweite Einrichtung ein Aktivieren oder Deaktivieren des Betriebselementes (AA) dann und nur dann bewirkt, wenn die Änderung von dem Komparator (CS) während der beiden genannten Bildzeilen festgestellt wird.

16. Fernsehsignalempfänger nach Anspruch 7,
dadurch gekennzeichnet, daß der vorbestimmte Modulationspegel 60% ist.

17. Fernsehsignalempfänger nach Anspruch 2,
dadurch gekennzeichnet, daß die zweite Einrichtung eine Aktivierung oder Deaktivierung des Betriebselementes (AA) dann und nur dann bewirkt, wenn die von dem Komparator (CS) festgestellte Änderung für eine vorbestimmte Zeitdauer andauert.

18. Fernsehsignalempfänger nach Anspruch 17,
dadurch gekennzeichnet, daß die vorbestimmte Zeitdauer gleich 0,5 s ist.

19. Fernsehsignalempfänger nach mindestens einem der vorausgehenden Ansprüche 4 und 12,
dadurch gekennzeichnet, daß er eine Speichereinrichtung zum Speichern der manuell bewirkten Auswählungen aufweist.

20. Fernsehsignalempfänger nach einem der vorausgehenden Ansprüche 1 bis 5,
dadurch gekennzeichnet, daß das Betriebselement (AA) eine Vorrichtung zum Umschalten von normalem Fernsehempfang auf Teletextsignalempfang ist.

21. Fernsehsignalempfänger nach einem der vorausgehenden Ansprüche,
dadurch gekennzeichnet, daß er eine Mikroprozessorsteuereinrichtung zum Steuern der ersten und/oder der zweiten Einrichtung aufweist.

22. Fernsehsignalempfänger nach Anspruch 1,
dadurch gekennzeichnet, daß der Komparator (CS) einen oder mehrere Zähler aufweist zum Zählen der Anzahl von Zeilen mit im wesentlichen keiner Videomodulation in dem Anfangsteil und dem Endteil des Bildes, und daß die zweite Einrichtung ein Aktivieren oder Deaktivieren des Betriebselementes (AA) jedesmal dann bewirkt, wenn sich die Anzahl der Zeilen ohne Videomodulation um wenigstens eine vorbestimmte Anzahl oder mehr ändert.

23. Verfahren zum Detektieren eines Werbeeinschubs und zum Eliminieren von dessen störenden Aspekten in einem Fernsehsignalempfänger mit einem Videosignaldemodulator, einer Dunkeltastdetektorschaltung zum Zweck des Feststellens einer Änderung der Form des gesendeten Bildes und einem mit dessen Ausgang verbundenen Betriebselement (AA), wobei das Verfahren die folgenden Schritte aufweist:
- der Videopegel wird während eines ausgewählten Teiles von ausgewählten Ablenkzeilen (20, 270) festgestellt und gemittelt,
- das resultierende gemittelte Videosignal wird mit einem Referenzpegel (LR) verglichen und
- wenn der gemittelte Videopegel für eine vorbestimmte Zeitdauer kleiner bleibt als der Referenzpegel, wird ein Steuersignal für das Betriebselement (AA) erzeugt.

## Revendications

1. Récepteur de signal de télévision comprenant un démodulateur de signal vidéo (RV), un circuit de comparateur (CS) destiné à détecter une variation de la forme de l'image transmise et un élément opérationnel (AA) connecté à sa sortie, caractérisé en ce que, afin de détecter une insertion d'annonce et afin d'éliminer ses aspects perturbants, ledit circuit de comparateur (CS) calcule la moyenne du niveau de parties sélectionnées de lignes sélectionnées (20, 270) du signal vidéo reçu depuis ledit démodulateur de signal vidéo (RV), compare ledit niveau vidéo moyenné à un niveau de référence (LR) et émet en sortie un signal pour commander ledit élément opérationnel (AA) si ledit niveau de signal vidéo moyenné reste inférieur audit niveau de référence (LR) pendant une période temporelle prédéterminée.

2. Récepteur de signal de télévision selon la revendication 1, caractérisé en ce que ledit comparateur (CS) détecte le niveau de modulation dudit signal vidéo composite pendant une période déterminée d'au moins deux lignes d'image, la première ligne étant dans le quartier supérieur de l'image et la seconde ligne étant dans le quartier inférieur de l'image.

3. Récepteur de signal de télévision selon la revendication 2 pour le système de transmission PAL à 625 lignes et 50 trames entrelacées par seconde, caractérisé en ce que ladite première ligne est comprise entre les dixième et quarantième lignes actives de chaque trame transmise et en ce que ladite seconde ligne est comprise entre les 250-ième et 280-ième lignes actives de chaque trame transmise.

4. Récepteur de signal de télévision selon la revendication 2 ou 3, caractérisé en ce que ladite première ligne et ladite seconde ligne sont sélectionnées dans certaines limites au moyen d'un moyen de sélection manuel.

5. Récepteur de signal de télévision selon la revendication 2, caractérisé en ce que ladite période déterminée desdites deux lignes d'image est comprise entre 10 et 42 microsecondes en partant du début de la période active desdites lignes.

6. Récepteur de signal de télévision selon l'une des revendications 1 à 5, caractérisé en ce que ledit élément opérationnel (AA) est un dispositif autorisant la reproduction du son (dispositif de mise au silence).

7. Récepteur de signal de télévision selon la revendication 2, caractérisé en ce que ledit second moyen assure l'activation ou la désactivation dudit élément opérationnel (AA) chaque fois que ledit comparateur (CS) détecte que le pourcentage de modulation vidéo est respectivement supérieur ou inférieur à un niveau prédéterminé.

8. Récepteur de signal de télévision selon l'une quelconque des revendications précédentes 1 à 5, caractérisé en ce que ledit élément opérationnel (AA) est un dispositif qui réalise une commutation depuis le canal de télévision reçu sur un autre canal qui peut être reçu prédéterminé.

9. Récepteur de signal de télévision selon la revendication 8, comprenant ce que l'on appelle un dispositif PIP (image dans image), caractérisé en ce que ledit dispositif de commutation est un dispositif pour échanger le canal reçu principal avec le canal reçu secondaire.

10. Récepteur de signal de télévision selon l'une quelconque des revendications précédentes 1 à 5, caractérisé en ce que ledit élément opérationnel (AA) est un dispositif pour activer ou désactiver un appareil auxiliaire connecté au récepteur de télévision.

11. Récepteur de signal de télévision selon la revendication 10, caractérisé en ce que ledit appareil auxiliaire connecté au récepteur de télévision est un enregistreur à bande vidéo ou magnétoscope.

12. Récepteur de signal de télévision selon l'une quelconque des revendications précédentes 1 à 5, caractérisé en ce que ledit élément opérationnel (AA) qui doit être activé ou désactivé peut être sélectionné parmi une pluralité d'éléments opérationnels au moyen d'un moyen de sélection manuel.

13. Récepteur de signal de télévision selon l'une quelconque des revendications précédentes, caractérisé en ce que ledit comparateur (CS) comprend un compteur de lignes d'image et un générateur de signal de fenêtre de fréquence de ligne.

14. Récepteur de signal de télévision selon la revendication 2, caractérisé en ce que ledit second moyen est prévu pour activer ou désactiver ledit élément opérationnel (AA) chaque fois que la variation est détectée par ledit comparateur (CS) pendant l'une desdites lignes d'image.

15. Récepteur de signal de télévision selon la revendication 2, caractérisé en ce que ledit second moyen est prévu pour activer ou désactiver ledit élément opérationnel (AA) si et seulement si la variation est détectée par ledit comparateur (CS) pendant les deux dites lignes d'image.

16. Récepteur de signal de télévision selon la revendication 7, caractérisé en ce que ledit niveau de modulation prédéterminé est de 60%.

17. Récepteur de signal de télévision selon la revendication 2, caractérisé en ce que ledit second moyen est prévu pour activer ou désactiver ledit élément opérationnel (AA) si et seulement si la variation détectée par ledit comparateur (CS) dure pendant une période temporelle prédéterminée.

18. Récepteur de signal de télévision selon la revendication 17, caractérisé en ce que ladite période temporelle prédéterminée est égale à 0,5 seconde.

19. Récepteur de signal de télévision selon soit la revendication 4 soit la revendication 12 soit les deux, caractérisé en ce qu'il comprend un moyen de mémoire pour mémoriser les sélections effectuées manuellement.

20. Récepteur de signal de télévision selon l'une quelconque des revendications précédentes 1 à 5, caractérisé en ce que ledit élément opérationnel (AA) est un dispositif pour réaliser une commutation depuis la réception de télévision normale sur une réception de signal télétexte.

21. Récepteur de signal de télévision selon l'une quelconque des revendications précédentes, caractérisé en ce qu'il comprend un moyen de commande à microprocesseur pour commander lesdits premier et/ou second moyens.

22. Récepteur de signal de télévision selon la revendication 1, caractérisé en ce que ledit comparateur (CS) comprend un ou plusieurs compteurs pour compter le nombre de lignes sensiblement sans modulation vidéo dans la partie initiale et la partie finale de l'image et en ce que ledit second moyen est prévu pour activer ou désactiver ledit élément opérationnel (AA) chaque fois que le nombre desdites lignes sans modulation vidéo varie d'au moins un nombre prédéterminé ou plus.

23. Procédé de détection d'une insertion d'annonce et permettant d'éliminer ses aspects perturbants dans un récepteur de signal de télévision, comprenant un démodulateur de signal vidéo, un circuit de détection de suppression dans le but de détecter une variation de la forme de l'image transmise et un élément opérationnel (AA) connecté à sa sortie, le procédé comprenant les étapes suivantes :
le niveau de signal vidéo est détecté et sa moyenne est calculée pendant une partie sélectionnée de lignes de déviation sélectionnées (20, 270) ;
le signal vidéo moyenné résultant est comparé à un niveau de référence (LR) ; et
si ledit niveau vidéo moyenné reste inférieur audit niveau de référence pendant une période temporelle prédéterminée, un signal de commande est produit pour ledit élément opérationnel (AA).
